# EUROPEAN PATENT SPECIFICATION

(11) **EP 0 220 033 B1**
(45) Date of publication and mention of the grant of the patent: **14.07.1993**
(21) Application number: 86307872.1
(22) Date of filing: 10.10.1986
(51) Int. Cl.: G11B 20/10, G11B 20/18, G11B 20/12

(54) **A PCM recording and reproducing apparatus**
PCM-Aufnahme- und -Wiedergabegerät
Appareil d'enregistrement et de reproduction MIC

(30) Priority: 11.10.1985 JP 227187/85; 23.01.1986 JP 12877/86; 23.01.1986 JP 12878/86
(43) Date of publication of application: 29.04.1987
(60) Divisional application: 90111761.4
(73) Proprietor: MITSUBISHI DENKI KABUSHIKI KAISHA, Tokyo 100 (JP)
(72) Inventor: Onishi, Ken c/o Mitsubishi Denki Kabushiki Kaisha, Hagaokakyo-shi Kyoto-fu (JP); Sugiyama, Kazuhiro Mitsubishi Denki K.K., Hagaokakyo-shi Kyoto-fu (JP)
(74) Representative: Beresford, Keith Denis Lewis

(56) References cited:
- EP-A- 0 129 224
- EP-A- 0 137 855
- EP-A- 0 178 589
- EP-A- 0 191 410
- PATENT ABSTRACTS OF JAPAN, vol. 7, no. 238 (P-231)[1383], 22nd October 1983; & JP - A - 58 125 209
- TANAKA K. et al.: "Improved Two Channel PCT Tape Recorder for Professional Use", presented at the 64th Convention of the Audio Engineering Society, November 1979, New York City

## Description

The present invention relates to pulse code modulated (PCM) data recordings, and to apparatus suitable for recording and/or reproducing PCM data.

In PCM audio recording, audio analogue signals are sampled and converted into digital form. The digital data produced is processed to provide error checking and correction data and together with this error data and also control and other data bits, is assembled to produce a frame of data. Data from each assembled frame is distributed amongst a number of recording tracks to produce blocks of recorded data. In the reverse of this process, i.e. in PCM audio reproduction, digital data is extracted from each block, processed to determine and correct errors and is reconverted to produce an audio analogue signal. The processing steps of sampling, analoque-to-digital data conversion, framing and block recording are controlled by using respective frequency signals generated by clock circuitry. Similarly, the steps of reproducing and extracting block data and digital-to-analogue data conversion are also controlled using respective frequency signals.

Each digital data sample is constituted by a fixed number of data bits. This number of data bits, referred to as the quantization bit number, can be different for different recordings. To accomodate a plurality or a range of recordings characterised by different quantization it is necessary to provide clock circuitry that will generate the different sets of respective frequency signals required for each different quantization bit number that is to be accomodated. Hitherto a different master clock has been provided for generating each set of respective frequency signals. In general it has not been possible to provide a common master clock for generating all sets of the respective frequency signals because the least common multiple of all frequency signals is usually inordinately high, too high for practical and cost-effective implementation.

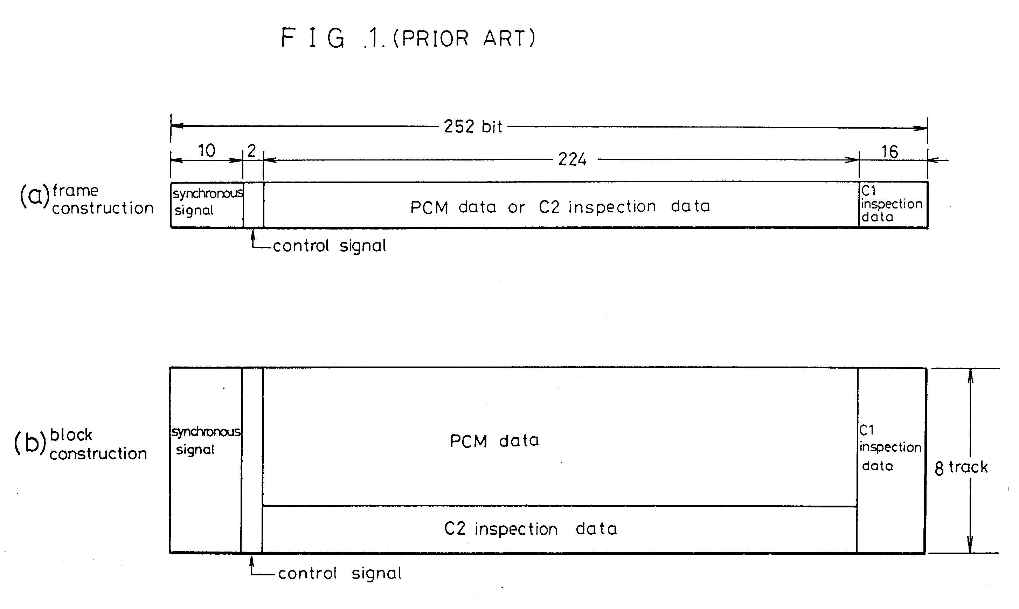

By way of background, reference will now be made to the following technical paper entitled "Improved Two Channel PCT Tape Recorder for Professional Use" by Tanaka, K. et al., presented at the 64th Convention of the Audio Engineering Society, Nov. 1979, New York City. Relevant details are discussed below with reference to Figures 1 to 3 of the drawings hereof.

Figure 1 shows (a) the frame, and (b) the block, assemblage of data adopted in the known PCM recorder above mentioned. Each single frame contains a total of 252 bits made up of 14 samples of PCM data each quantized into 16 bits, 10 synchronisation bits, 2 control bits, and 16 error bits of C1 inspection data for error detection and correction. In the block construction, the frame constructed data is distributed and recorded amongst a total of 8 tracks of which 6 tracks receive the PCM data and 2 tracks receive the error data. The frame construction of Figure 1 is determined in the following way.

Suppose that the number of analogue signal channels is N, the number of samples per frame is S, and the number of tracks for recording the PCM data is Tr. The frame and block frequency F_{B} is related to the sampling frequency F_{S} by the following formula:

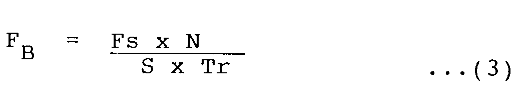

Also suppose that the total number of bits per frame is T_{S}, then T_{S} is given by the following:

${\text{T}}_{\text{S}} \text{= B x S + m (4),}$

where B is the quantization bit number of a sample, and m is the number of additional bits including synchronisation bits, etc. The transmission frequency Fc for transmitting the bits in the frame is then represented by the following formula:

${\text{F}}_{\text{C}} {\text{= F}}_{\text{B}} {\text{x T}}_{\text{S}} \text{(5)}$

Then, if the ratio of the F_{C} and F_{S} x N is a simple integer, the F_{C} and the F_{S} x N can be derived from a single clock. The S and the m are selected accordingly. In the case of Figure 1, N=2, S=14, Tr=6, and the block frequency F_{B} is given as: 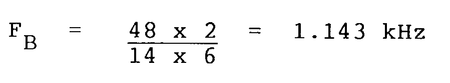
where F_{S} is 48 kHz. Since there are 10 synchronisation bits, 2 control bits, and 16 C₁ inspection data bits, m = 10 + 2 + 16 = 28. In addition, B = 16, and thus T_{S} = 16 x 14 + 28 = 252 bits from formula (4).

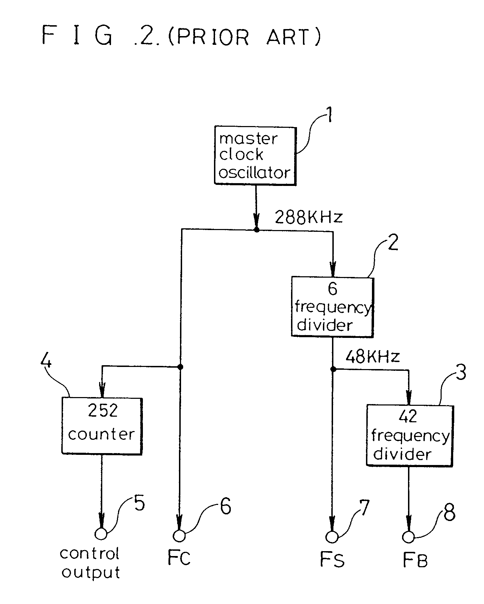

Accordingly, from formula (5):F_{C}=252 x 1.143 kHz = 228 kHz, and the ratio of F_{C} and F_{S} x N becomes a simple integer, that is 288 : 48 x 2 = 3:1. Such a clock can be generated by the clock generator of Figure 2.

The master clock oscillator 1 is shown in Figure 2. This is comprised of a ÷ 6 frequency divider 2, a ÷ 42 frequency divider 3, and a 252 counter 4. Reference numbers 5, 6, 7 and 8 denote output terminals. A signal of 288 kHz is generated by the master clock oscillator 1, and this signal is sent to the ÷ 6 frequency divider 2, the 252 counter 4, and the output terminal 6. The output of the ÷ 6 frequency divider 2 is a signal of frequency 48 kHz, and this is sent to the ÷ 42 frequency divider 3 and the output terminal 8. The 252 counter 4 outputs clock signals required for the generation of synchronisation and control data to the output terminal 5. The ÷ 42 frequency divider 3 outputs clock signals of block frequency F_{B} to the output terminal 8.

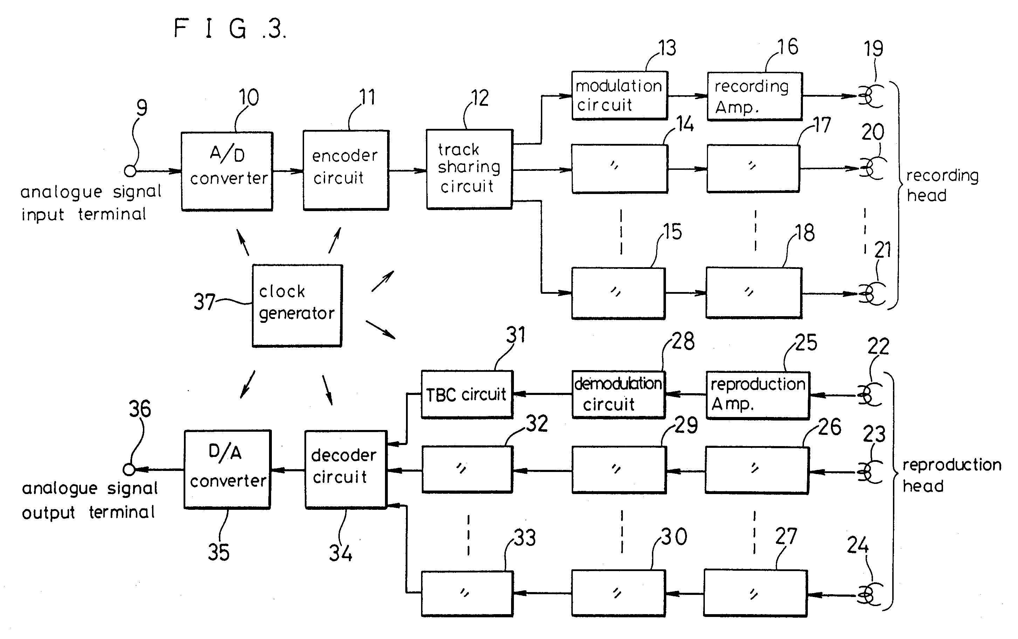

Figure 3 shows a block diagram of a PCM tape recorder. Two channels of analogue signals are input at a terminal 9 of this apparatus. The recording apparatus part of this recorder comprises an A/D converter 10, an encoder circuit 11, a track sharing circuit 12, modulation circuits 13, 14 and 15, recording amplifiers 16, 17, and 18, and recording heads 19, 20, and 21. The reproducing apparatus part of this recorder comprises reproduction heads 22, 23 and 24, reproduction amplifiers 25, 26 and 27, demodulation circuits 28, 29 and 30, time axis correction circuits 31, 32 and 33 (hereinafter referred to as "TBC circuit"), a decoder circuit 34, a D/A converter 35, and channel analogue output terminals 36. A clock generator 37 is provided in common with both parts of the recorder.

This recorder is operated as follows:
First of all, in the recording apparatus part of the recorder an analogue signal input from the input terminal 9 is converted into PCM data having a quantization bit number B = 16 by the A/D converter 10, and two error correction detection codes, that is, C₂ inspection data and C₁ inspection data are added thereto by the encoder circuit 11. This latter is provided to enable the detection and correction of errors that might arise due to material defects in the recording medium. A control signal is added to the encoded signal by the track sharing circuit 12, and it is shared amongst 8 tracks, to be sent to the modulation circuits 13, 14, and 15. These signals are modulated by the modulation circuits 13, 14 and 15, and a synchronous signal is added. Recording is performed using the recording amplifiers 16, 17 and 18 and the recording heads 19, 20 and 21. In the reproduction apparatus part of the recorder, signals are reproduced by the reproduction heads 22, 23 and 24 and are amplified by the reproduction amplifiers 25, 26 and 27. The synchronisation signals are detected by the demodulation circuits 28, 29 and 30, the clock signals are reproduced, and these clock signals and the data, from which the synchronisation signals are separated, are sent to the TBC circuits 31, 32 and 33. In the TBC circuits 31, 32 and 33 jitters and wow flutters are removed from the reproduced data, and data then sent to the decoder cicruit 34. In the decoder circuit 34 error detection and correction of the data is conducted using the C₁ inspection data and the C₂ inspection data, the data is converted into the original analogue signal by the D/A converter 35, and it is output from the output terminal 36. The control signal is used for control of the apparatus such as for control of emphasis or for selecting sampling frequency F_{S}. The clock generator 37 is typically constituted as shown in Figure 2. A clock signal of frequency F_{S} is sent to the A/D converter 10 and the D/A converter 35, and clock signals of frequency F_{C} and F_{B} and the output from the output terminal 5 are sent to the track sharing circuit 12, the modulation circuits 13, 14 and 15, and the TBC circuits 31, 32 and 33.

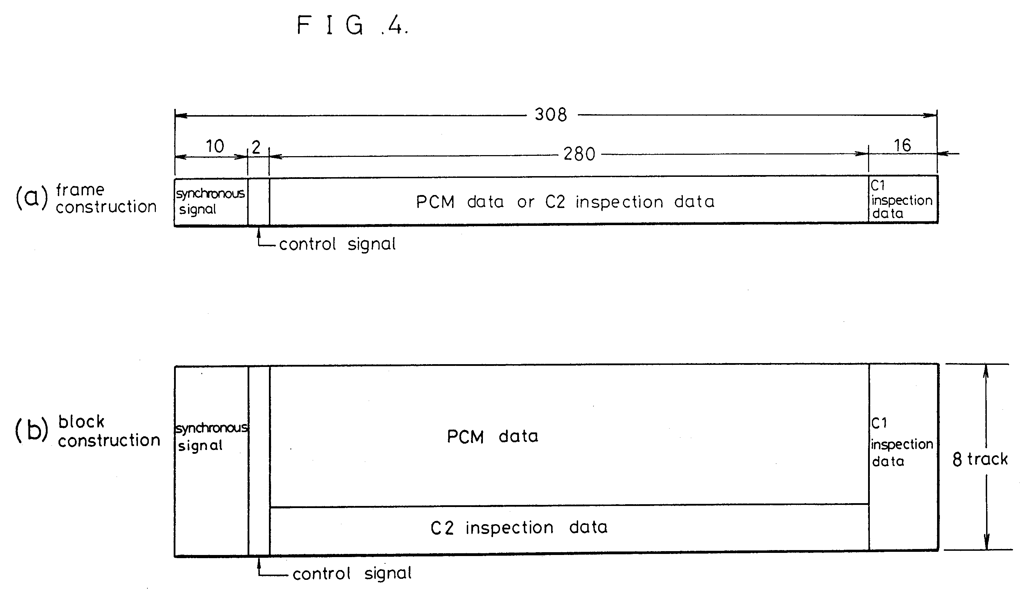

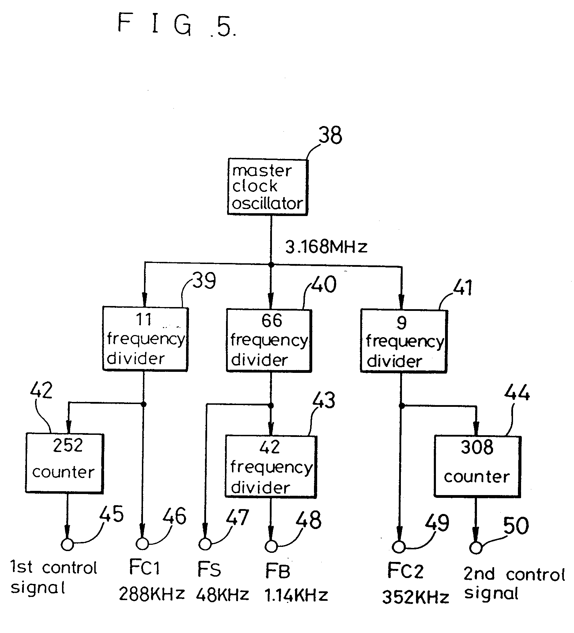

In such a recorder the frame/block construction of Figure 4 may be used where a second quantization bit number B₂ = 20 is accommodated. Because there is only a difference in the quantization bit number compared to Figure 1, T_{S} becomes 20 x 14 + 28=308 from formula (4), and F_{C} becomes 1.143 kHz x 308 = 352 kHz from formula (5). In this case, the bit number per frame is different dependent on the quantization bit number. It is 252 for the quantization bit number 16 whereas it is 308 for the quantization bit number 20. The main portion of a clock generator which corresponds to these two quantization bit numbers is shown in Figure 5. This comprises a master clock oscillator 38 having a frequency of 3.168 MHz, a ÷ 11 frequency divider 39, a ÷66 frequency divider 40, a ÷ 9 frequency divider 41, a 252 counter 42, a ÷ 42 frequency divider 43, a 308 counter 44, and terminals 45, 46, 47, 48, 49, and 50. When the quantization bit number is 16, the signals of output terminals 45, 46, 47 and 48 are used as outputs and when the quantization bit number is 20, the signals of output terminals 47, 48, 49 and 50 are used as outputs.

The frame construction of the PCM recording and reproducing apparatus has the folowing drawbacks:
First of all, as apparent from Figures 2 and 5, the frequency of the master clock need become higher by eleven times as from 228 kHZ to 3.168 MHz in order for the recorder to accommodate the two quantization bit numbers, and this disadvantageously reduces the freedom of selection of clocks in a PCM recorder which uses various clocks for encoding. Also, the signals of the output terminsl 45 to 50 are sent to the track sharing circuit 12 and the TBC circuits 31, 32 and 33 and if the bit number per frame is changed, control becomes complicated because these circuits usually use memories. Furthermore, when the bit number per frame is changed the synchronisation signal protection circuit in the decoder circuits 28, 29 and 30 does not operate satisfactorily, and the clock signals to be sent to the TBC circuits 31, 32 and 33 should be switched for each track, making the hardware required complicated and difficult to implement.

Apparatus that is to accommodate different quantizations can be simplified if a common frame format is adopted for each different quantization. In this common frame format the total number of bits and the number of added bits are the same in each respective case. The total number of sample data bits per frame will also be the same although the numbers of samples per frame will differ according to the different quantization bit numbers accommodated. Such apparatus simplification is known and is described, for example, in published European patent applications numbers EP-A-0129224 and 0137855, and in Japanese Laid open patent application No. JP-A-58.125209.

In EP-A-0129224 the master clock circuitry is constructed to generate a different sampling frequency signal for each different quantisation and each of these is produced from a different master clock. The analogue signal is single channel. Examples are given of rotating head single track recording and stationary multi-track recording. The frequencies of the discrete master clocks, in general, are so high, however, that it would not be practical to generate the master clock signals using a common master clock.

In EP-A-0137855 signals differing in sampling frequency and numbers of quantized bits are recorded in the same signal format. A code signal specifying that either a two-channel digital audio signal or digital data has been recorded, and control data giving the linear velocity of a digital disc during reproduction are inserted into every frame of a recording signal. One block of digital data is formed of a predetermined quantity of data, and the same control data as that employed to control digital processing is recorded at least twice in each block. During reproduction, the digital disc is rotated to provide a constant linear velocity in accordance with the control data, and a reproduction circuit is supplied with a clock signal of a frequency corresponding to the transfer rate of the reproduced data. The reproduced digital audio data from the reproduction circuit is converted to analog data, and the passband of a low-pass filter supplied with the reproduced analog audio signal can be made to conform to the band of the reproduced analog audio signal.

In JP-A-58.125209 PCM recording and reproduction operations are performed for different sampling frequencies and different quantisation bit numbers. The frame length is set to a number of bits equal to the sum of an integer multiple of the lowest common multiple of the different quantisation bit numbers with the bit number of a redundant component.

The present invention is intended to provide a remedy. It has now been found that given an appropriate choice of common frame format and appropriate format parameters, that it is possible to simplify apparatus construction, and in particular to simplify clock circuitry design.

In accordance with the invention there is provided a pulse code modulated (PCM) data recording apparatus in which sample data of different quantization number (Bi; i=1 to K; K>1) can be processed to produce representative PCM data for recording the same in a common frame format, said apparatus comprising:
analogue-to-digital conversion means for producing said sample data;
data processing means for processing said sample data, to produce, for recording, said representative data in said common frame format; and
master clock circuit means for producing sampling frequency and frame frequency signals for controlling said analogue-to-digital means and said data processing means respectively;
in which apparatus:
said analogue-to-digital conversion means is responsive to a signal of common sampling frequency to convert analogue signals applied to each one of a number (N > 1) of input channels thereof to form sample data for each different quantization as may be selected;
said data processing means is operable to assemble a block from said PCM data and to record the same onto a number (Tr> 1) of the data recording tracks of a recording medium, the common frame format so provided being such that for at least one (Bj) of said quantization numbers (Bi; i=1 to k) the ratio (TA:TB) of the common frame bit length (TA) thereof, which is defined as the sum of a common multiple of the quantization numbers (Bi; i=1 to k) and a constant (m) representing added frame bits, and the number of samples of data per channel per block [TB = (1/N) x Sj x Tr], is of integer value, where Sj is the number of data samples per frame corresponding to quantization number Bj; and said master clock circuit means is constructed to provide a common master clock signal, and to derive said common sampling frequency signal and said frame frequency signals therefrom.

Note is taken that in EP-A-0129224 an example is given where, for single- channel single track operations, and 16-bit quantisation transmission rates are 1.176 Mbps and 1.28 Mbps; sampling frequencies are 44.1 kHz and 48 kHz; and master clock frequencies are 14.112 MHz and 15.36 MHz, respectively. In this same example for 12-bit quantisation the transmission rate is 0.64 Mbps, the sampling frequency is 32 kHz, and the master clock frequency is 7.68 MHz. For these last values given the ratio TA/TB can be calculated to be 20:1 i.e. a ratio of integer value. The sampling frequencies are different and no single master clock is provided in common.

In the accompanying drawings:
Figure 1 is a diagram showing a frame/block construction in a case where the quantization bit number is 16 in a conventional PCM recording and reproducing apparatus;
Figure 2 is a block diagram showing a clock generator of the conventional device;
Figure 3 is a block diagram showing a multi-track PCM recording and reproducing apparatus;
Figure 4 is a diagram showing a frame/block construction in a case where the quantization bit number is 20 in a PCM recording and reproducing apparatus;
Figure 5 is a block diagram showing a clock generator for realizing both of the frame/block constructions of Figure 1 and Figure 4;
Figure 6 is a diagram showing a frame/block construction of a recorder embodying the present invention; and
Figure 7 is a block diagram showing a clock generator of the PCM recorder.

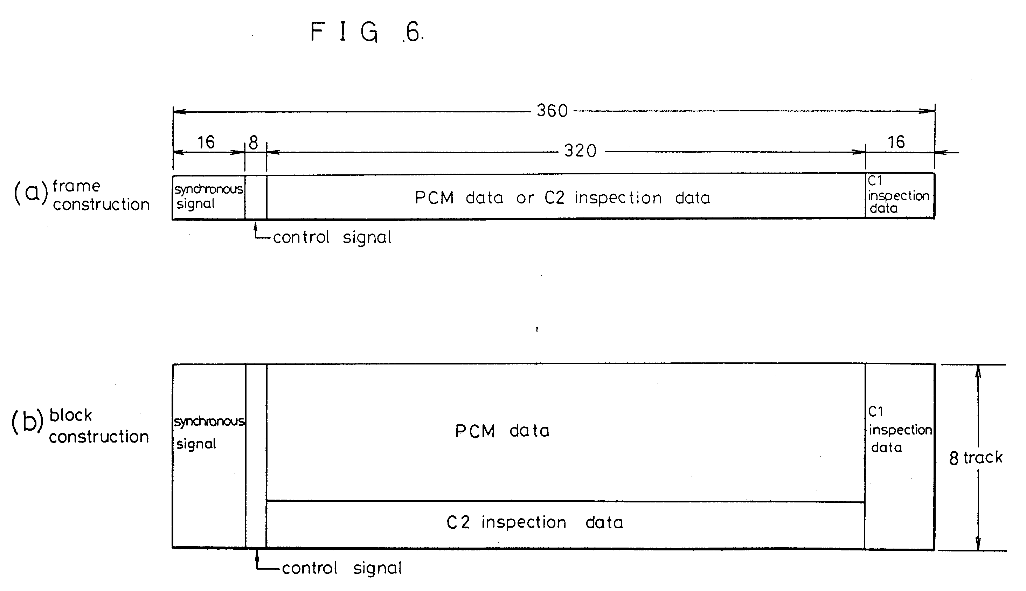

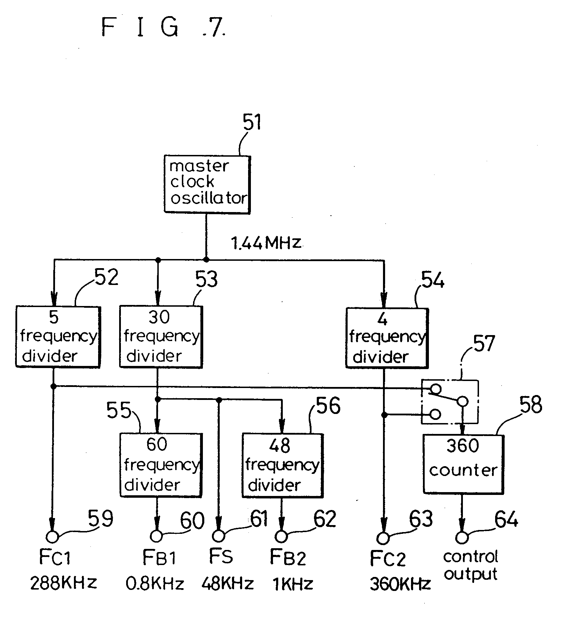

In order to explain this invention in detail, a preferred embodiment will be described and reference will be made to figures 6 and 7 of the drawings. The description that follows is given by way of example only.

Figures 6(a) and (b) show, respectively, a frame construction and a block construction adopted for a PCM recorder embodying the present invention. The frame construction comprises a total of 360 bits including 16 synchronisation bits, 8 control bits, 320 bits of PCM sample data or C₂ inspection data, and 16 bits of C₁ inspection data. This frame construction is determined as in the following:
If it is assumed that the channel number N = 2, the number of tracks allocated for PCM data Tr = 6, and that quantization bit numbers are B₁ = 16, B ₂= 20, then the LCM (least common multiple) (B₁,B₂) represented by formula (1) is 80. The quotient of this LCM 80 by the one word bit number 16 is 5, but this is desirable to be an even number in a case of two channels. Table 1 and Table 2 show the results obtained by calculating formulae (1) and (2) using 80 x 2 = 160 bits instead of 80. Cases are highlighted where the ratio of T_{A} and T_{B} is a simple integer. Table 1 shows typical format frequency parameters for the quantization bit number B₁ = 16, and Table 2 shows those for the quantization bit number B₂ = 20.

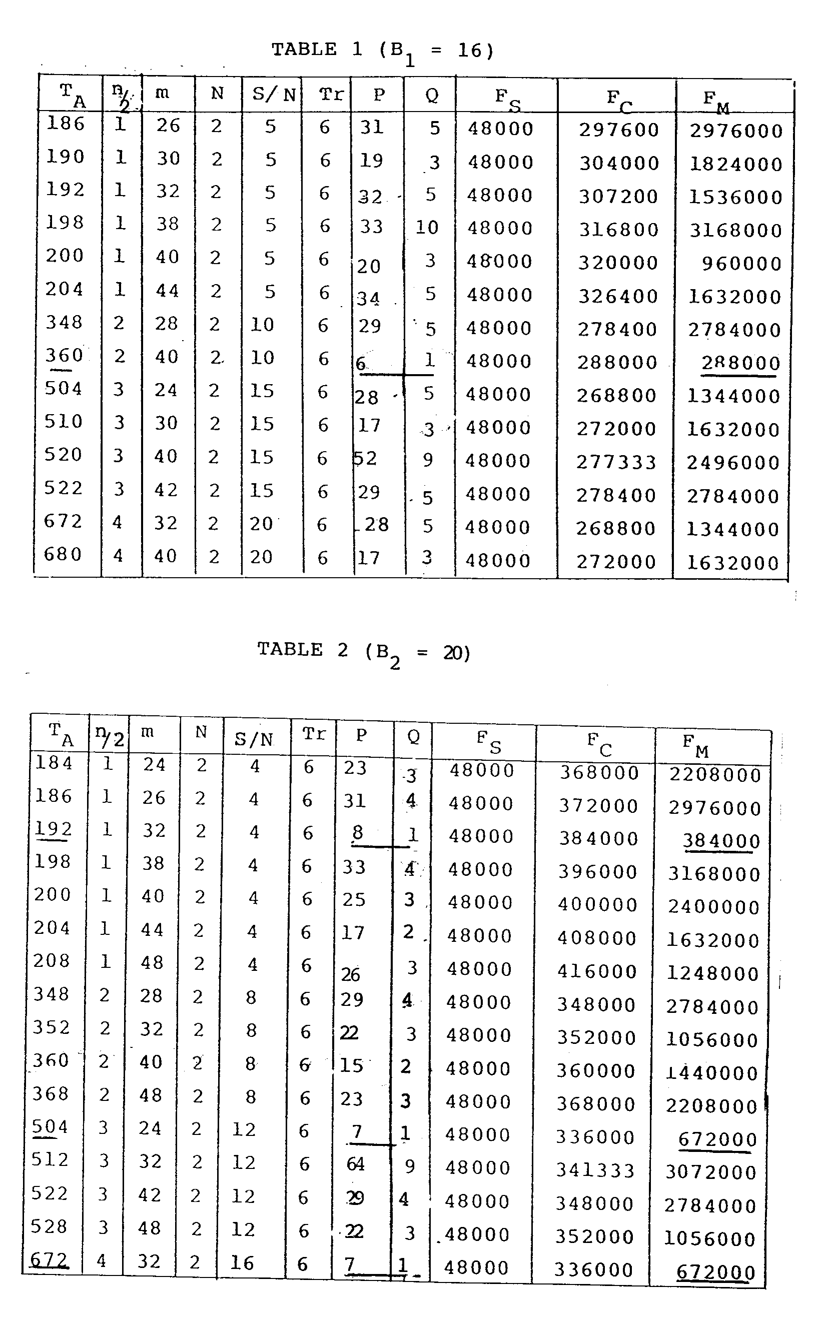

Herein, P:Q represents the ratio of T_{A} and T_{B} and those having a low Q are listed in these tables. F_{M} is a master clock frequency. As m an even number from 24 to 48 bits is adopted. This includes the synchronisation bits, control bits, and the bits of the C₁ inspection data. The frame/block construction of Figure 6 having T_{A} = 360 bits is obtained by selecting rows in which T_{A} has the same bit number 360 in both of the Tables 1 and 2.

Referring to Table 1 it is apparent that the master clock frequency Fm, given as 288 kHz, is noteable, being much lower that the other master clock frequencies given in this table. Furthermore this frequency is a sub-multiple of the corresponding frequency Fm of 1.44 MHz given in Table 2. Accordingly the design of clock circuitry can be much simplified. Details of this will be given below.

Referring to Table 2 it is also apparent that the master clock frequencies Fm given as 384 kHZ, 672 kHz and 672 kHz for the common frame bit lengths TA of 192, 504 and 672, respectively, also are markedly lower than the remaining entries in this table. These too are each a sub-multiple of the corresponding master clock frequencies 1.536 MHz, 1.344 MHz and 1.344 MHz given in Table 1. Adoption of these formats likewise allow simplification in the design of the clock circuitry.

It will be noted that each of these four examples correspond to a ratio TA:TB = P:Q that is integer valued for at least one of the two tables 1 and 2. This common feature is taken as the basis for this invention.

Now detailed consideration will be given to the example in which the frame bit length is 360.

The main portion of a clock generator realizing such a frame/block construction is shown in Figure 7. This comprises a master clock oscillator 5, a ÷ 5 frequency divider 52, a ÷ 30 frequency divider 53, a ÷ 4 frequency divider 54, a ÷ 60 frequency divider 55, a ÷ 48 frequency divider 56, a switch 57, a 360 counter 58, and ouput terminals 59 to 64.

As apparent from Tables 1 and 2, the master clock oscillator 51 generates a clock signal of 1.44 MHz and this is sent to the ÷ 5 frequency divider 52, the ÷ 30 frequency divider 53, and the ÷ 4 frequency divider 54. The output of the ÷ 5 frequency divider 52 provides a bit frequency F_{C1} = 288 kHz corresponding to the quantization bit number B₁ = 16. This is sent to the output terminal 59. The output of the ÷ 4 frequency divider 54 provides a bit frequency F_{C2}= 360 kHz corresponding to the quantization bit number B₂=20. This is sent to the output terminal 63. The output of the ÷ 30 frequency divider 53 provides a frequency of F_{S} = 48 kHz, and this is sent to the ÷ 60 frequency divider 55, the ÷ 48 frequency divider 56, and the output terminal 61. The output F_{B1} = 0.8 kHz of the ÷ 60 frequency divider 55 and the output F_{B2} = 1 KHz of the ÷ 48 frequency divider 56 are sent to the output terminals 60 and 62, respectively. The switch 57 operates to select the output of the ÷ 5 frequency divider 52 when the quantization bit number B₁ = 16, and to select the output of the ÷ 4 frequency divider 54 when the quantization bit number B₂ = 20.

In this embodiment the same frame bit length TA is used for each of the two quantization bit numbers, thereby enabling a simplification of the hardware of the recording and reproducing apparatus parts of the recorder. As described, it also allows a reduction in the frequency of the common master clock.

Although details have been given only for dual channel apparatus (N=2) and for the recording and reproduction of data on six-out-of-eight tracks (Tr=6), it will be appreciated that the invention is applicable to constructions and formats in which different numbers of channels and tracks are adopted.

Although in the embodiment described only two different quantization bit numbers (B₁=16 and B₂=20) are accommodated, it will be appreciated that the principle of this invention can be applied to the simplification of clock circuitry design where more than two different quantization bit numbers need to be accommodated.

Although parallel multi-track recording and reproduction only has been described it will be appreciated that the present invention is also applicable to serial recording and reproduction in cyclic order, e.g. in the order track 1, track 2, .... track 6, track 7, track 8, track 1,.... .

## Claims

1. A pulse code modulated (PCM) data recording apparatus in which sample data of different quantisation number (Bi; i=1 to k; k>1) can be processed to produce representative PCM data for recording the same in a common frame format, said apparatus comprising:
analogue-to-digital conversion means for producing said sample data;
data processing means for processing said sample data, to produce, for recording, said representative data in said common frame format; and
master clock circuit means for producing sampling frequency and frame frequency signals for controlling said analogue-to-digital means and said data processing means respectively;
in which apparatus:
said analogue-to-digital conversion means is responsive to a signal of common sampling frequency to convert analogue signals applied to each one of a number (N > 1) of input channels thereof to form sample data for each different quantisation as may be selected;
said data processing means is operable to assemble a block from said PCM data and to record the same onto a number (Tr > 1) of the data recording tracks of a recording medium, the common frame format so provided being such that for at least one (Bj) of said quantisation numbers (Bi; i=1 to k) the ratio (TA:TB) of the common frame bit length (TA) thereof, which is defined as the sum of a common multiple of the quantisation numbers (Bi; i=1 to k) and a constant (m) representing added frame bits, and the number of samples of data per channel per block [TB = (1/N) x Sj x Tr], is of integer value, where Sj is the number of data samples per frame corresponding to quantization number Bj; and
said master clock circuit means is constructed to provide a common master clock signal, and to derive said common sampling frequency signal and said frame frequency signals therefrom.

2. Apparatus as claimed in claim 1, further characterised in that said number of input channels is plural (N > 1).

3. Apparatus as claimed in either one of the preceding claims wherein said number of the data tracks is plural (Tr > 1).

4. Apparatus as claimed in claim 3, wherein for the common frame format provided: N=2; Tr=6; k=2; B1=16; B2=20; m=40; and TA=360.

5. Apparatus as claimed in any one of the preceding claims for processing sample data of two different quantisation numbers (Bi; i=1,2) wherein said master clock circuit means (Fig.7) is constructed to provide a common master clock signal, and to derive said common sampling frequency signal and a different frame frequency signal (F_{C1}, F_{C2}) for framing sample data of each respective quantisation number (B1, B2) wherein the frequency (F_{C1}) of one of the two frame frequency signals (F_{C1} & F_{C2}) is neither a whole multiple nor a whole sub-multiple of the other (F_{C2}).

6. A pulse code modulated data recording and reproducing apparatus comprising the operative combination of recording apparatus as claimed in any one of the preceding claims 1 to 5 and a reproducing apparatus, said reproducing apparatus comprising:
data processing means for extracting PCM data from a PCM data recording produced by said recording apparatus and for processing the same to produce sample data;
digital-to-analogue means for converting said sample data to analogue signal; and
master clock circuit means having means to provide a common master clock signal, and means to derive from said common master clock signal a common sampling frequency signal and a plurality of respective frame frequency signals each for a different sample quantisation number, for operating said digital-to-analogue means and said data processing means, respectively.

7. A pulse code modulated data recording and reproducing apparatus as claimed in claim 6, in which master clock circuit means is provided in common to both said recording apparatus and said reproducing apparatus to operate said analogue-to-digital means, said digital-to-analogue means and both of said data processing means.

## Patentansprüche

1. Gerät zum Aufzeichnen von impulscodemodulierten (PCM-) Daten, in dem Abtastdaten mit unterschiedlicher Quantisierungszahl (Bi; i=1 bis k; k>1) zu repräsentativen PCM-Daten für das Aufzeichnen derselben in einem gemeinsamen Blockformat verarbeitet werden können, mit
einer Analog/Digital-Umsetzeinrichtung zum Erzeugen der Abtastdaten,
einer Datenverarbeitungseinrichtung zum Verarbeiten der Abtastdaten für das Erzeugen der repräsentativen Daten im gemeinsamen Blockformat für die Aufzeichnung und
einer Haupttaktschaltungseinrichtung zum Erzeugen von Signalen mit einer Abtastfrequenz und einer Blockfrequenz für das Steuern der Analog/Digital-Umsetzeinrichtung bzw. der Datenverarbeitungseinrichtung,
wobei in dem Gerät
die Analog/Digital-Umsetzeinrichtung auf ein Signal mit einer gemeinsamen Abtastfrequenz durch Umsetzen von an jeweils einen einer Anzahl (N>1) von Eingangskanälen derselben angelegten analogen Signalen zu Abtastdaten mit jeweils unterschiedlicher wählbarer Quantisierung anspricht,
die Datenverarbeitungseinrichtung zum Zusammenstellen eines Aufzeichnungsblockes aus den PCM-Daten und zum Aufzeichnen desselben auf eine Anzahl (Tr>1) von Datenaufzeichnungsspuren eines Aufzeichnungsträgers betreibbar ist, wobei das gemeinsame Blockformat derart gebildet ist, daß für mindestens eine (Bj) der Quantisierungszahlen (Bi; i=1 bis k) das Verhältnis (TA:TB) der gemeinsamen Blockbitlänge (TA) desselben, die als Summe aus einem gemeinsamen Vielfachen der Quantisierungszahlen (Bi; i=1 bis k) und einer die hinzugefügten Blockbits angebenden Konstante (m) definiert ist, zu der Anzahl von Datenabtastwerten je Kanal und je Aufzeichnungsblock [TB = (1/N) x Sj x Tr] ein ganzzahliger Wert ist, wobei Sj die der Quantisierungszahl Bj entsprechende Anzahl der Datenabtastwerte je Block ist, und
die Haupttaktschaltungseinrichtung zum Erzeugen eines gemeinsamen Haupttaktsignals und zum Ableiten des gemeinsamen Abtastfrequenzsignals und der Blockfrequenzsignale aus diesem gestaltet ist.

2. Gerät nach Anspruch 1, ferner dadurch gekennzeichnet, daß die Anzahl der Eingangskanäle eine Mehrzahl ist (N > 1).

3. Gerät nach einem der vorangehenden Ansprüche, in dem die Anzahl der Datenspuren eine Mehrzahl (Tr > 1) ist.

4. Gerät nach Anspruch 3, in dem für das gemeinsame Blockformat vorgesehen ist: N = 2; Tr = 6; k = 2; B1 = 16; B2 = 20; m = 40 und TA = 360.

5. Gerät nach irgendeinem der vorangehenden Ansprüche zum Verarbeiten von Abtastdaten mit zwei verschiedenen Quantisierungszahlen (Bi; i = 1, 2), in dem die Haupttaktschaltungseinrichtung (Fig. 7) zum Erzeugen eines gemeinsamen Haupttaktsignals und zum Ableiten des gemeinsamen Abtastfrequenzsignals und eines unterschiedlichen Blockfrequenzsignals (F_{C1}, F_{C2}) für die Blockbildung aus den Abtastdaten mit der jeweils entsprechenden Quantisierungszahl (B1, B2) gestaltet ist, wobei die Frequenz (F_{C1}) eines der beiden Blockfrequenzsignale (F_{C1} & F_{C2}) weder ein ganzzahliges Vielfaches noch ein ganzzahliger Teil der anderen (F_{C2}) ist.

6. Gerät zum Aufzeichnen und Wiedergeben von impulscodemodulierten Daten, das die betriebliche Kombination aus dem Aufzeichnungsgerät gemäß einem der vorangehenden Ansprüche 1 bis 5 und einem Wiedergabegerät umfaßt, welches
eine Datenverarbeitungseinrichtung zum Herausgreifen der PCM-Daten aus einer durch das Aufzeichnungsgerät erzeugten PCM-Datenaufzeichnung und zum Verarbeiten derselben zu Abtastdaten,
eine Digital/Analog-Einrichtung zum Umsetzen der Abtastdaten in ein analoges Signal und
eine Haupttaktschaltungseinrichtung mit einer Einrichtung zum Erzeugen eines gemeinsamen Haupttaktsignals und einer Einrichtung aufweist, die für das Betreiben der Digital/Analog-Einrichtung bzw. der Datenverarbeitungseinrichtung aus dem gemeinsamen Haupttaktsignal ein gemeinsames Abtastfrequenzsignal und eine Vielzahl von Blockfrequenzsignalen für jeweils eine unterschiedliche Abtastquantisierungszahl ableitet.

7. Gerät zum Aufzeichnen und Wiedergeben von impulscodemodulierten Daten gemäß Anspruch 6, in dem die Haupttaktschaltungseinrichtung für das Aufzeichnungsgerät und das Wiedergabegerät gemeinschaftlich vorgesehen ist, um die Analog/Digital-Einrichtung, die Digital/Analog-Einrichtung und die beiden Datenverarbeitungseinrichtungen zu betreiben.

## Revendications

1. Un appareil d'enregistrement de données en modulation par impulsions et codage (MIC), dans lequel des données d'échantillons ayant différents nombres de bits de quantification (Bi; i = 1 à k; k > 1) peuvent être traitées de façon à produire des données MIC représentatives, pour enregistrer ces dernières dans un format de trame commun, cet appareil comprenant :
des moyens de conversion analogique-numérique qui sont destinés à produire les données d'échantillons;
des moyens de traitement qui sont destinés à traiter les données d'échantillons, pour produire, pour l'enregistrement, les données représentatives, dans le format de trame commun; et
un circuit d'horloge pilote qui est destiné à produire des signaux de fréquence d'échantillonnage et de fréquence de trame, pour commande respectivement les moyens de conversion analogique-numérique et les moyens de traitement de données;
dans lequel :
les moyens de conversion analogique-numérique réagissent à un signal d'une fréquence d'échantillonnage commune en convertissant des signaux analogiques appliqués à chaque canal parmi un nombre (N > 1) de canaux d'entrée de ces signaux, pour former des données d'échantillons pour chaque quantification différente qui peut être sélectionnée;
les moyens de traitement de données sont capables d'assembler un bloc à partir des données MIC, et d'enregistrer ce bloc sur un certain nombre (TR > 1) des pistes d'enregistrement de données d'un support d'enregistrement, le format de trame commun ainsi établi étant tel que pour l'un au moins (Bj) des nombres de bits de quantification (Bi; i = 1 à k), le rapport (TA:TB) entre le nombre de bits de trame commun (TA) de ce format, qui est défini comme étant la somme d'un multiple commun des nombres de bits de quantification (Bi; i = 1 à k) et d'une constante (m) représentant des bits de trame ajoutés, et le nombre d'échantillons de données par canal et par bloc [TB = (1/N) x Sj x Tr], a une valeur entière, Sj désignant le nombre d'échantillons de données par trame correspondant au nombre de bits de'quantification Bj; et
le circuit d'horloge pilote est construit de façon à produire un signal d'horloge pilote commun, et à élaborer à partir de celui-ci le signal de fréquence d'échantillonnage commun et les signaux de fréquence de trame.

2. Appareil selon la revendication 1, caractérisé en outre en ce que le nombre de canaux d'entrée est supérieur à 1 (N > 1).

3. Appareil selon l'une quelconque des revendications précédentes, dans lequel le nombre des pistes de données est supérieur à un (Tr > 1).

4. Appareil selon la revendication 3, dans lequel, pour le format de trame commun qui est établi, on a : N=2; Tr=6; k=2; B1=16; B2=20; m=40 et TA=360.

5. Appareil selon l'une quelconque des revendications précédentes, pour le traitement de données d'échantillons correspondant à deux nombres de bits de quantification différents (Bi; i = 1, 2), dans lequel le circuit d'horloge pilote (figure 7) est construit de façon à produire un signal d'horloge pilote commun, et à élaborer le signal de fréquence d'échantillonnage commun et un signal de fréquence de trame différent (F_{C1}, F_{C2}) pour l'assemblage en trame de données d'échantillons correspondant à chaque nombre respectifs de bits de quantification (B₁, B₂), et dans lequel la fréquence (F_{C1}) de l'un des deux signaux de fréquence de trame (F_{C1} et F_{C2}) n'est ni un multiple entier, ni un sous-multiple entier de l'autre fréquence (F_{C2}).

6. Un appareil d'enregistrement et de reproduction de données en modulation par impulsions et codage, comprenant la combinaison fonctionnelle d'un appareil d'enregistrement selon l'une quelconque des revendications 1 à 5 précédentes, et d'un appareil de reproduction, cet appareil de reproduction comprenant :
des moyens de traitement de données qui sont destinés à extraire des données MIC à partir d'un enregistrement de données MIC qui est produit par l'appareil d'enregistrement, et qui sont destinés à traiter ces données pour produire des données d'échantillons;
des moyens de conversion numérique-analogique destinés à convertir les données d'échantillons en un signal analogique; et
un circuit d'horloge pilote comportant des moyens qui sont destinés à produire un signal d'horloge pilote commun, et des moyens qui sont destinés à élaborer à partir du signal d'horloge pilote commun un signal de fréquence d'échantillonnage commun et un ensemble de signaux de fréquence de trame respectifs, chacun d'eux concernant un nombre de bits de quantification d'échantillons différent, afin de faire fonctionner respectivement les moyens de conversion numérique-analogique et les moyens de traitement de données.

7. Un appareil d'enregistrement et de reproduction de données en modulation par impulsions et codage selon la revendication 6, dans lequel le circuit d'horloge pilote est établi en commun à la fois pour l'appareil d'enregistrement et pour l'appareil de reproduction, de façon à faire fonctionner les moyens de conversion analogique-numérique, les moyens de conversion numérique-analogique et les deux types de moyens de traitement de données.
